# EUROPÄISCHE PATENTANMELDUNG

(11) **EP 0 631 911 A1**
(43) Veröffentlichungstag der Anmeldung: **04.01.1995**
(21) Anmeldenummer: 93110575.3
(22) Anmeldetag: 02.07.1993
(51) Int. Cl.: B60R 22/36

(54) **Gurtaufroller für Sicherheitsgurte von Fahrzeugen und Verfahren zu seiner Herstellung**

(71) Anmelder: VOLKSEIGENES UNTERNEHMEN NORMA, EE-0006 Tallinn (EE)
(72) Erfinder: Teder, Leonid, E., EE0029 Tallinn (EE); Raidaru, Mihkel, EE0006 Tallinn (EE); Ots, Aidu, EE0038 Tallinn (EE)
(74) Vertreter: Nix, Frank Arnold, Dr.

(57) **Zusammenfassung**

Der vorgeschlagene Gurtaufroller für Sicherheitsgurte von Fahrzeugen besteht aus einem U-förmigen Gehäuse mit Seitenwänden 2, 3, zwischen denen sich eine Aufrollwelle 28 mit zu beiden Seiten angeordneten und mit einer Sperrklinke 4, 6, 7 zusammenwirkenden Sperrädern 31, 32 erstreckt. Ihr eines Ende ist in einem eine Triebfeder 38 aufweisenden Federantrieb gelagert und auf ihr anderes Ende ist ein Räderbund mit einem Steuerzahnrad 54 und einem drehbaren Schwungrad 60 aufgesetzt. Diese Gehäuseseite ist abgedeckt von einer Sensorenabdeckung 68, die in ihrem unteren Bereich ein auf plötzliche Fahrzeugverzögerungen ansprechendes Sensorsystem 18 umschließt und darüberliegend koaxial zur Aufrollwelle einen Steuerkranz 71 begrenzt drehbar lagert.

Auf plötzliches Ausziehen des Gurts reagiert das gegenüber dem Steuerzahnrad 54 zurückbleibende Schwungrad 60 und bewirkt über eine Blockierklinke 56 eine Drehung des Steuerkranzes 71, welche über eine Nockentasche 73 die Sperrklinke 4, 6, 7 in Eingriff bringt. Auf plötzliche Fahrzeugverzögerungen reagiert das Sensorsystem 18, läßt einen Steuerhaken in das Steuerzahnrad 54 greifen, wodurch ebenfalls die Sperrklinke 4, 6, 7 in Eingriff gebracht wird.

Der Gurtaufroller besteht aus den einzeln vormontierten und auf einfache Weise zusammenbaubaren Baugruppen Gehäuseeinheit, Sensorsystem, Aufrollwelleeinheit, Räderbund und Sensorenabdeckung.

## Beschreibung

Die Erfindung bezieht sich auf einen Gurtaufroller für Sicherheitsgurte von Fahrzeugen mit einem U-förmigen Gehäuse, in dem eine Aufrollwelle zum Aufwickeln des Gurts drehbar gelagert ist und einen im Sinne des Aufwickelns wirkenden Federantrieb aufweist. An beiden Enden der Aufrollwelle ist je ein verzahntes Sperrad befestigt, das mit einer U-förmig ausgebildeten und schwenkbar im Gehäuse gelagerten Sperrklinke zusammenwirkt. Diese wird von einem Sensorensystem in die Sperrstellung geschwenkt, wobei einer der Sensoren anspricht, wenn die Verzögerung des Fahrzeugs einen bestimmten Wert überschreitet (fahrzeugsensitiver Sensor).

Im Laufe der bereits langjährigen Entwicklung von Gurtaufrollern hat sich im Hinblick auf Abmessungen, Funktion und Aufbau eine weitgehende Vereinheitlichung ergeben. Trotz allem gibt es noch Verbesserungsmöglichkeiten, insbesondere bezüglich der konstruktiven Auslegung für eine weitgehend automatisierte Fertigung zur Erlangung von Kostenvorteilen.

Die bekannten Gurtaufroller (Aufrollautomaten) sind für eine mechanisierte Montage nicht gut geeignet. Das U-förmige Gehäuse durchläuft die Fertigung von Anfang bis Ende. An ihm werden von Stufe zu Stufe alle anderen Bauteile integriert, eingeführt, angebaut und befestigt.

Dies erfordert in einer Fertigungsstraße einen hohen maschinellen Aufwand, da das Gehäuse mit den mehr oder weniger befestigten Teilen immer wieder in eine zuführungsgerechte Position bewegt werden muß.

Schwierigkeiten macht auch die Entwicklung von fahrzeugsensitiven Sensoren für die Auslösevorrichtung, die sich für verschiedene Einbauwinkel in Fahrzeugen gleich gut eignen. Bis jetzt muß man bei der Herstellung von Aufrollern für Fahrzeuge verschiedener Bauart eine Reihe von Sensoren mit verschieden ausgeführten Neigungswinkeln herstellen und vorrätig halten.

Gurtaufroller der betrachteten Art sind z.B. beschrieben in den Dokumenten SU 1 286 451, DE 33 40 938, SU 1 320 101, SU 1 652 134, SU 1 682 224 und SU 1 780 525. Von diesen kommt der vorliegenden Erfindung der Gurtaufroller für Sicherheitsgurte von Fahrzeugen gemäß dem Dokument SU 1 682 224 (23.05.1989) am nächsten.

Dieser bekannte Gurtaufroller besitzt ein U-förmiges Gehäuse, dessen beide Seitenwände schräg nach unten geöffnete Langausschnitte zur Aufnahme einer Aufrollwelle aufweisen. Der fahrzeugsensitive Sensor ist in einem viereckigen Fenster einer Gehäusewand in einer Schale eingebaut und wirkt mittels eines federbeaufschlagten Hebels auf einen Steuerhaken, welcher auf dem Sperrschenkel einer U-förmigen Sperrklinke drehbar angeordnet ist.

Der Steuerhaken wird beim Auslösen des Sensors mittels des genannten Hebels zum Verrasten mit der Verzahnung eines Steuerrades geschwenkt und zieht dann die Sperrklinke in die Sperrstellung, in der sie in zwei außerhalb der Gehäusewände an der Aufrollwelle befestigte Sperräder greift.

Der federbeanspruchte Hebel des Sensors wird mit einer Kugel als Trägheitsmasse in einem drehbar angeordneten Lagerungsglied in seiner Ruhestellung gehalten. Bei diesem Sensor kann die Neigung des Aufrollautomaten nur um eine Achse verändert werden, die senkrecht zur Gehäuserückwand orientiert ist.

Nachteilig ist bei diesem bekannten Gurtaufroller:
- Wegen der außerhalb der Gehäusewände angeordneten Sperräder und Sperrschenkel der Sperrklinke ergeben sich große Abmessungen des Gurtaufrollers;
- die schräg nach unten öffnenden Langausschnitte sind schwierig vor Staub zu schützen; auch sind sie nicht gut zum Einsetzen der Aufrollwelle ins Gehäuse geeignet;
- es gibt keine Möglichkeit, die Neigung des fahrzeugsensitiven Sensors entsprechend einem Verdrehen des Gehäuses um die Achse der Aufrollwelle einzustellen;
- der fahrzeugsensitive Sensor ist sehr kompliziert;
- die Befestigung der Federantriebeinheit an dem Gehäuse ist aufwendig und erfordert Schrauben, Nieten oder dergleichen.

Der Erfindung liegt die Aufgabe zugrunde, einen universell verwendbaren Gurtaufroller zu schaffen, der sehr einfach hergestellt und montiert werden kann. Er soll ohne größeren Aufwand unter verschiedenen Neigungswinkeln in verschiedene Fahrzeugkarosserien eingebaut werden können.

Zur Lösung der genannten Aufgabe wird ausgegangen von einem Gurtaufroller für Sicherheitsgurte von Fahrzeugen mit einem U-förmigen Gehäuse, in dem eine mit einem Federantrieb gekuppelte Aufrollwelle für das Gurtband drehbar gelagert ist, an deren Enden je ein verzahntes Sperrad befestigt ist, das mit einer schwenkbar im Gehäuse gelagerten U-förmigen Sperrklinke zusammenwirkt, welche von Sensorsystemen beim Überschreiten vorbestimmter Verzögerungswerte des Fahrzeugs und/oder Beschleunigungswerte des Gurtabrollens in ihre die Sperräder blockierende Sperrstellung verschwenkbar ist.

Die Lösung der Aufgabe gelingt dadurch, daß erfindungsgemäß der Gurtaufroller aus vormontierten Baugruppen zusammensetzbar ausgestaltet ist:
- einer Gehäuseeinheit, in der zwischen den Seitenwänden des Gehäuses die Sperrklinke eingesetzt ist und von einem Schenkel derselben eine Konsolachse durch die benachbarte Gehäuseseitenwand nach außen ragt, wo ein zweiarmiger Steuerhaken schwenkbar auf die Konsolachse aufgesetzt ist,
   wobei des Gehäuses Seitenwände zur freien Aufnahme der Aufrollwelle zwei symmetrische, rechtwinklig zur Gehäuserückwand verlaufende, nach vorn offene Langausschnitte mit kreisrunden Enderweiterungen aufweisen
   und zur Aufnahme eines fahrzeugsensitiven Sensors ein kreisrundes Fenster in einer Seitenwand vorgesehen ist, und wobei zwischen den Seitenwänden eine Stützstange starr befestigt ist, die das Gurtband unter etwa 45° von hinten auf die Aufrollwelle auflaufen läßt,
- einem fahrzeugsensitiven Sensorsystem, welches zur Anpassung an verschiedene Neigungswinkel des Gehäuses im Fenster verdrehbar angeordnet ist und einen im Innenraum einer Rundschale untergebrachten Massensensor aufweist, in dem ein Lagerungsglied mittels eines Schnappkopfs an einer rechtwinklig zur Gehäuseseitenwand orientierten Tragplatte drehbar befestigt ist, so daß die Drehachse des Lagerungsglieds immer parallel zur Gehäuseseitenwand bleibt und durch den Schwerpunkt einer auf dem Boden des Lagerungsgliedes liegenden, als Trägheitsmasse dienenden Kugel geht, wozu die Tragplatte ein Zentralloch zum Einsetzen des Schnappkopfs und mindestens eine Ausnehmung neben dem Loch und das Lagerungsglied neben seiner Schnappkopfachse mindestens einen mit der Ausnehmung zusammenwirkenden Vorsprung zur Festlegung des Lagerungsgliedes in einer vorbestimmten Drehstellung an der Tragplatte aufweisen,
   wobei am Boden des Lagerungsgliedes ein Hebelstoßer angelenkt ist, dessen zur Seitenwand des Gehäuses rechtwinklig orientierte Stoßfläche mit dem unteren Kontaktarm des Steuerhakens unabhängig von der Drehlage des Lagerungsgliedes um seine Schnappkopfachse zusammenwirkt,
- einer Aufrollwelleeinheit bestehend aus der Aufrollwelle selbst, ihrem Federantrieb auf der einen und einem Räderbund auf der anderen Seite, der aus einem Steuerzahnrad und auf diesem sitzenden und mit ihm rotierenden Teilen des gurtbandsensitiven Sensorsystems besteht, wobei der Federantrieb eine vorgespannte und bis zum Ende der Montage des Gurtaufrollers in dieser Lage arretierte Triebfeder enthält,
   und das Steuerzahnrad des Räderbundes zur Verbindung mit seinem Ende der Aufrollwelle einstückig mit einem Kupplungszapfen ausgebildet ist,
   und die Triebfeder des Federantriebes mit ihrem inneren Ende an einer Kupplungsachse gehalten ist, welche in einer Lageröffnung der Basis des Federantriebes gelagert ist und so eine erste Lagerstelle der Aufrollwelleeinheit bildet sowie zur Verbindung des Federantriebes mit dem anderen Ende der Aufrollwelle eingerichtet ist, wobei die Basis des Federantriebes an ihren Rändern einige Sperrfinger und die zugehörige Gehäusewand entsprechende Einrast-Ausnehmungen aufweist, in die die Sperrfinger beim Einführen der Aufrollwelleeinheit ins Gehäuse einrasten,
- und einer Sensorenabdeckung aus einem Deckel, an dessen Innenwand eine kreisrunde Rippe koaxial zu der Aufrollwelle ausgebildet ist, auf welcher Rippe ein durch eine Feder beaufschlagter, eine Innenverzahnung aufweisender Steuerkranz des gurtbandsensitiven Sensorsystems drehbar angeordnet ist.

Um mit billigen Mitteln eine stabile Aufrollwelle zu schaffen, enthält diese eine Wellenplatte mit abgestuften Enden, auf welche eine Spule aufgesetzt ist und auf die die beiden Sperräder mit Preßpassung aufgeschoben sind. Dabei sind aus dem Mittelteil jedes Sperrades je zwei Tatzen ausgestanzt und rechtwinklig nach außen abgebogen, wobei diese zusammen mit den überstehenden Enden der Wellenplatte kreuzartige Vorsprünge bilden. Diese Kreuzvorsprünge dienen zum Kuppeln der Aufrollwelle mit der Kupplungsachse des Federantriebs und dem Kupplungszapfen des Steuerzahnrads, in deren Stirnseiten entsprechende kreuzartige Ausnehmungen ausgearbeitet sind.

Um nach erfolgtem Zusammenbau des Gurtaufrollers auch das Gurtband automatisch aufrollen lassen zu können, ist es zweckmäßig, die Triebfeder des Federantriebs im maximal vorgespannten Zustand zur Verfügung zu haben. Das Innenende der Triebfeder greift in einen Schlitz im Stirnteil der Kupplungsachse, und um diese bei gespannter Triebfeder zu blockieren, ist in ihrem Stirnteil mindestens eine Bohrung ausgeführt, in die ein von der inneren Wandung der Kappe der Federbasis aufragender Stiftvorsprung greift, welcher zwischen der Kappe und dem Stirnende der Kupplungsachse, vorzugsweise nahe bei der Oberfläche der Kappe, eine Sollbruchstelle aufweist.

Um die Aufrollwelleeinheit auf einfache Weise in das Gehäuse einsetzen und dort festlegen zu können, sind auf der Seite des Federantriebs Mittel zum selbsttätigen Einrasten vorgesehen. Diese bestehen zweckmäßigerweise aus an den Rändern der Federbasis angeformten laschenartigen Sperrfingern, die beim Einschieben der Aufrollwelleeinheit über die Ränder der entsprechenden Seitenwand des Gehäuses gleiten und bei Erreichen der endgültigen Position in Ausnehmungen in den Rändern der Seitenwand einrasten.

Zur Erzielung eines leichten und reibungsfreien Drehens der Aufrollwelleeinheit im Gehäuse ist es zweckmäßig, eine Berührung zwischen den kreisförmigen Enderweiterungen der Langausschnitte der Seitenwände des Gehäuses und den Halsabschnitten von Kupplungsachse auf der einen Seite und Kupplungszapfen auf der anderen Seite zu vermeiden. Auf der Seite des Federantriebs findet hierzu die Kupplungsachse eine Lagerstelle in einer Lageröffnung der Federbasis. Auf der Seite des Räderbundes findet der Kupplungszapfen eine Lagerstelle in der Weise, daß beim Aufsetzen der Sensorenabdeckung auf die zugehörige Seitenwand des Gehäuses eine stiftartige Tragachse, welche von der Innenwandung des Deckels aufragt, in das Loch einer in den Endabschnitt des Kupplungszapfens eingesetzten Lagerbüchse greift.

Um die Aufrollwelleeinheit einfach und unkompliziert in das Gehäuse einsetzen zu können und dennoch eventuell auftretende extreme Gurtzugkräfte direkter in die Gehäuseseitenwände einleiten zu können, sind die Kupplungsachse des Federantriebs und der Kupplungszapfen des Steuerzahnrades auf ihren Halsabschnitten mit Abflachungen ausgebildet, welche das freie Einschieben der Aufrollwelleeinheit in das Gehäuse ermöglichen, wobei es bei extremen Kraftbeanspruchungen, wie sie bei einer Kollision des Fahrzeugs auftreten können, die Halsabschnitte von Kupplungsachse und Kupplungszapfen sich an einem oberen Umfangsabschnitt der Enderweiterungen der Langausschnitte der Seitenwände des Gehäuses abstützen.

Um auf einfache Weise eine Reibung zwischen den Sperrädern der Aufrollwelle und den Innenflächen der Gehäuseseitenwände zu vermeiden, haben die Kupplungsachse und der Kupplungszapfen innenseitig schmale Flansche, welche zwischen den Sperrädern und den Innenflächen der Seitenwände zu liegen kommen.

Zur Erhöhung der Zuverlässigkeit und Erzielung einer Redundanz der Funktionen des Gurtaufrollers sind das gurtbandsensitive Sensorsystem und das fahrzeugsensitive Sensorsystem getrennt und unabhängig voneinander ausgebildet. Hierzu ist im Aufbau des gurtbandsensitiven Sensors gemäß Anspruch 7 der Abstand zwischen der Konsolachse und der Steuerfläche des Steuerkranzes im Ruhezustand vorgesehen.

Nachfolgend wird die Erfindung durch die Beschreibung von Ausführungsbeispielen an Hand der beigegebenen Zeichnungen weiter erläutert. Es zeigen:

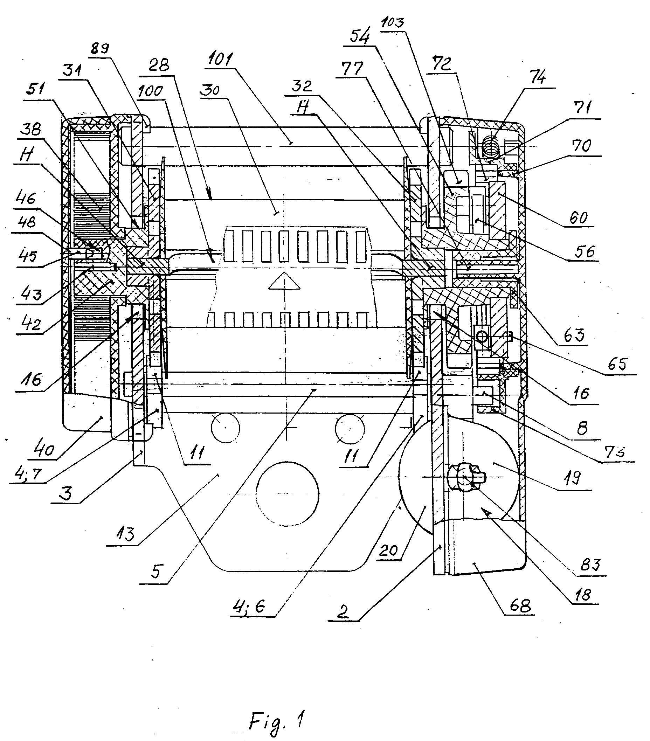

- Fig. 1 -: eine bevorzugte Ausführungsform eines Gurtaufrollers in einer Längsschnittdarstellung durch die Aufrollwelle in aufrechter Stellung;
- Fig. 2 -: einen dazu rechtwinkligen Querschnitt im Bereich der Sensorsysteme;
- Fig. 3 -: die vormontierte Gehäuseeinheit;
- Fig. 4 -: den vormontierten fahrzeugsensitiven Sensor;
- Fig. 5 -: die Rotor-Baugruppe aus der Aufrollwelle, dem Federantrieb auf der einen und einem Räderbund auf der anderen Seite, Zustand vor dem Einführen in die Gehäuseeinheit;
- Fig. 6, 7 -: einen Längsschnitt und eine Stirnansicht der Aufrollwelle;
- Fig. 8, 9 -: eine Stirnansicht und einen Querschnitt eines Sperrads;
- Fig. 10 -: eine Schnittansicht des Federantriebes mit maximal vorgespannter Triebfeder;
- Fig. 11 -: die Ansicht der Kupplungsachse in Richtung des Pfeils "P" in Fig. 10;
- Fig. 12 -: den Räderbund (Steuerzahnrad und Schwungrad mit zugehörigen Teilen) im vormontierten Zustand in einer Stirnansicht mit weggebrochenen Bereichen;
- Fig. 13 -: die Sperrklinke in einer perspektivischen Darstellung;
- Fig. 14 -: schematisch das Fertigungsstadium bei ins Gehäuse eingeschobenem Rotor; die Aufrollwelle ist etwas gedreht, um die Wellenplatte besser zu zeigen;
- Fig. 15 -: die Innenfläche der Sensorenabdeckung im vormontierten Zustand;
- Fig. 16 -: eine Schnittansicht des im Gurtaufroller aufrecht eingebauten fahrzeugsensitiven Sensors von der Seite des Steuerhakens her gesehen;
- Fig. 17 -: eine Ausführung des Gurtaufrollers zur Befestigung an der Decke der Fahrzeugkarosserie in einer Querschnittdarstellung im Bereich der Sensorsysteme.

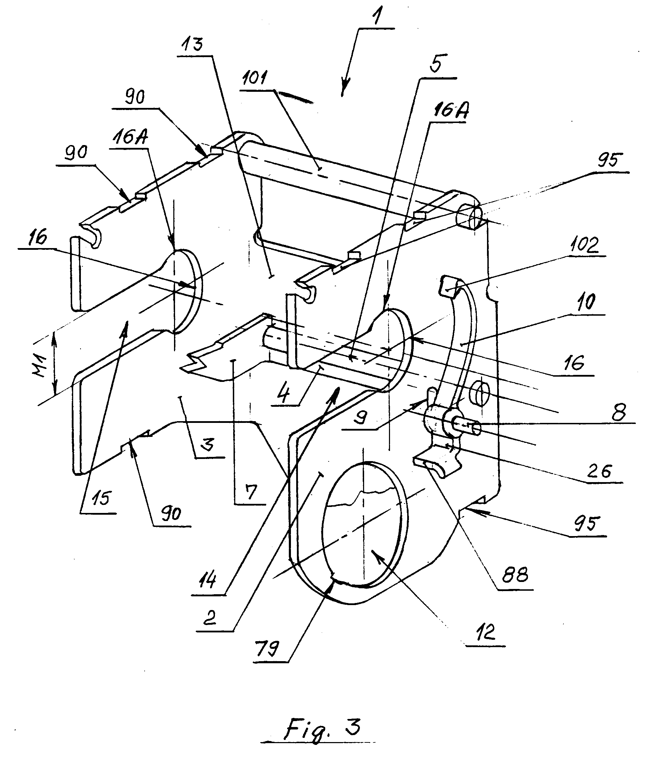

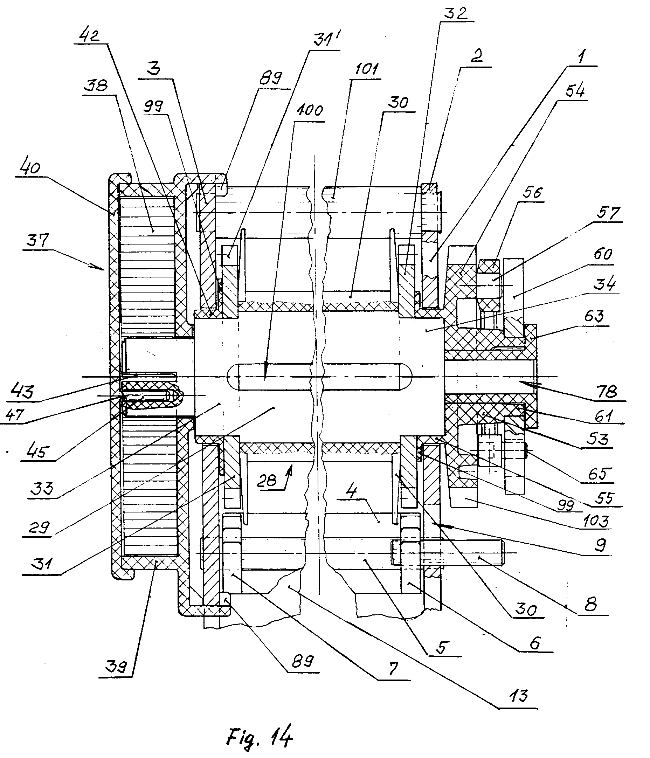

Der vorgeschlagene Gurtaufroller wird aus einer Mehrzahl von vormontierten Baugruppen zusammengesetzt:
Die erste Baugruppe ist eine Gehäuseeinheit (Fig. 3) aus einem U-förmigen Gehäuse 1, dessen voneinander beabstandete Seitenwände 2 und 3 über die Gehäuseruckwand 13 miteinander verbunden sind. Zwischen ihnen ist eine U-förmige Sperrklinke 4 (Fig. 13) eingebaut.

In den seitlichen Sperrschenkeln 6, 7 der Sperrklinke 4 sind Ausschnitte 5a ausgespart, mittels welcher sie auf eine gehäusefeste Bolzenachse 5 aufgeschoben und an dieser schwenkbar gehalten ist. Der (in den Zeichnungen rechte) Sperrschenkel 6 trägt eine nach außen ragende Konsolachse 8, welche durch ein Langloch 9 in der Seitenwand 2 greift und auf der ein zweiarmiger Steuerhaken 10 schwenkbar gelagert ist. Die Enden der Sperrschenkel 6, 7 weisen je zwei Rastzähne 11 auf.

In der Wand 2 ist ein kreisrundes Fenster 12 zur Montage eines fahrzeugsensitiven Sensors ausgeschnitten. Beide Gehäuseseitenwände 2 und 3 sind mit symmetrisch angeordneten nach vorne öffnenden und rechtwinklig zur Gehäuserückwand 13 gerichteten Langausschnitten 14, 15 mit kreisrunden Enderweiterungen 16 ausgebildet. Die Breite M1 der Ausschnitte ist kleiner als die Durchmesser N1 ihrer zentralen kreisrunden Enderweiterungen 16. Diese Ausbildung erlaubt eine vereinfachte Montage der Aufrollwelle.

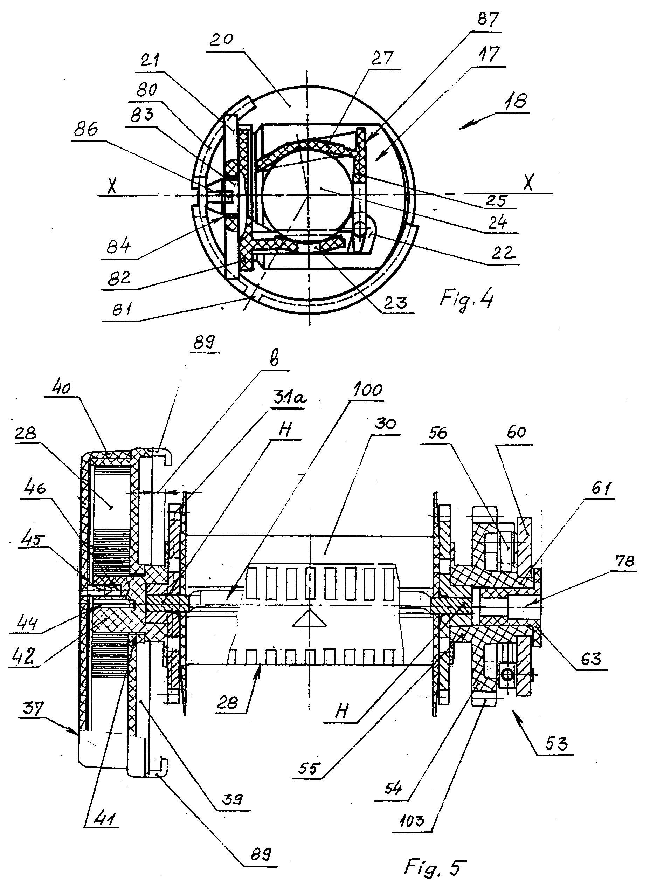

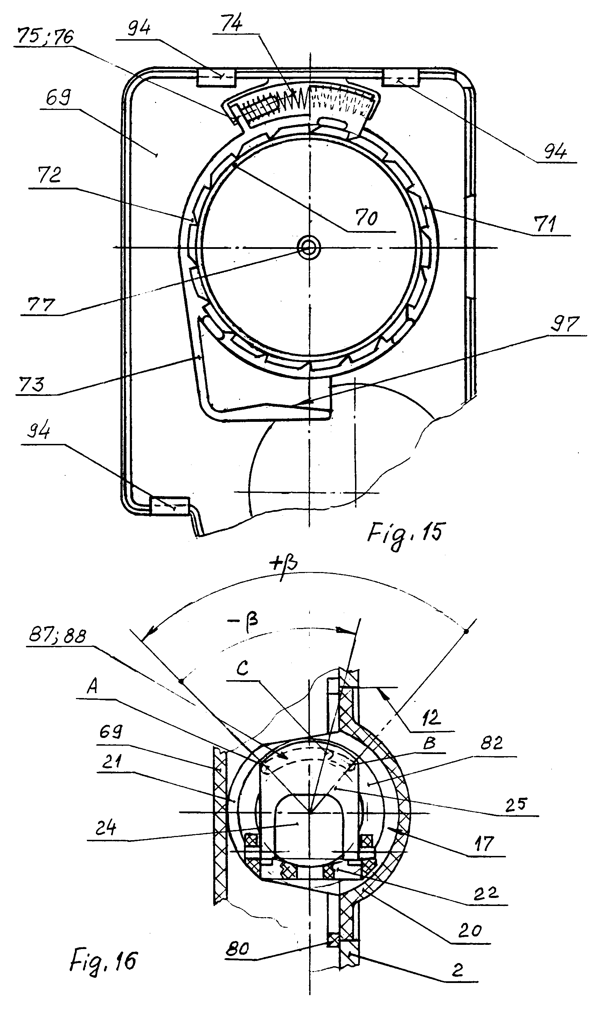

Die zweite Baugruppe ist ein fahrzeugsensitiver Sensor (Fig. 4, 16) zur Zusammenwirkung mit dem Steuerhaken 10. Er besteht aus einem fahrzeugsensitiven Massensensor 19, welcher in eine Rundschale 20 eingesetzt und an einer rechtwinklig zur Gehäuseseitenwand 2 orientierten Tragplatte 21 befestigt ist. Der Sensor 19 weist ein Lagerungsglied 22 auf, auf dessen konisch ausgebildeten Boden 23 eine Kugel 24 als Trägheitsmasse aufgelegt ist, und einen an dem Boden 23 angelenkten Hebelstoßer 25, der mit dem unteren Kontaktarm 26 des Steuerhakens 10 zusammenwirkt. Der Hebelstoßer 25 ist mit einem Kappenteil 27 ausgebildet, das sich von oben auf die Kugel 24 legt.

Die dritte Baugruppe ist eine Aufrollwelleeinheit (Fig. 5, 6, 7, 8, 9) mit einer Aufrollwelle 28. Diese besteht aus einer im Querschnitt rechteckigen und abgestuften Wellenplatte 29, einer Spule 30 und zwei Sperrädern 31, 32, die auf die Enden 33 und 34 der Wellenplatte 29 aufgepreßt sind.

Das linke Sperrad 31 hat zwei aus seiner Mitte ausgestanzte und nach außen abgebogene Tatzen 35, die bis zum Ende des Spulenendes reichen. Das rechte Sperrad 32 ist als Spiegelbild des linken ausgebildet und seine Tatzen 36 sind nach rechts abgebogen.

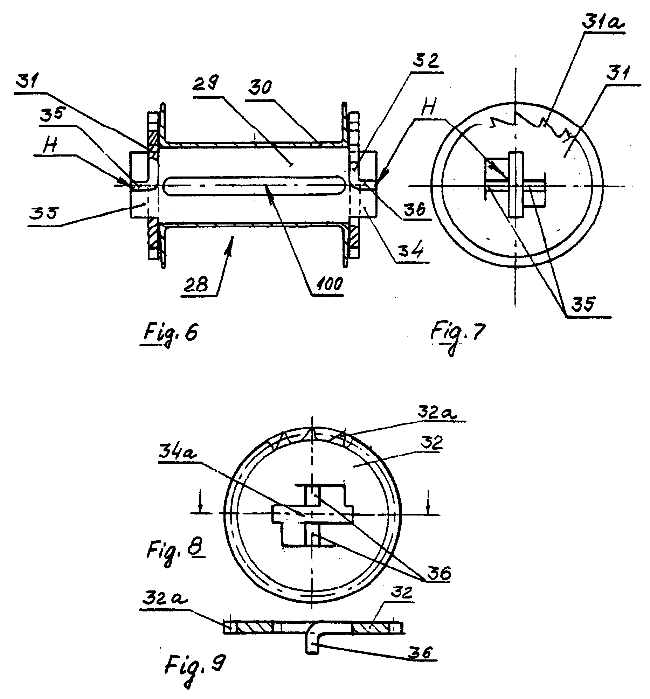

In Axialrichtung auf die Aufrollwelle 28 gesehen (Fig. 7) bilden die zwei Tatzen an jedem Ende der Aufrollwelle 28 zusammen einen kreuzartigen Vorsprung H beiderseits der Aufrollwelle.

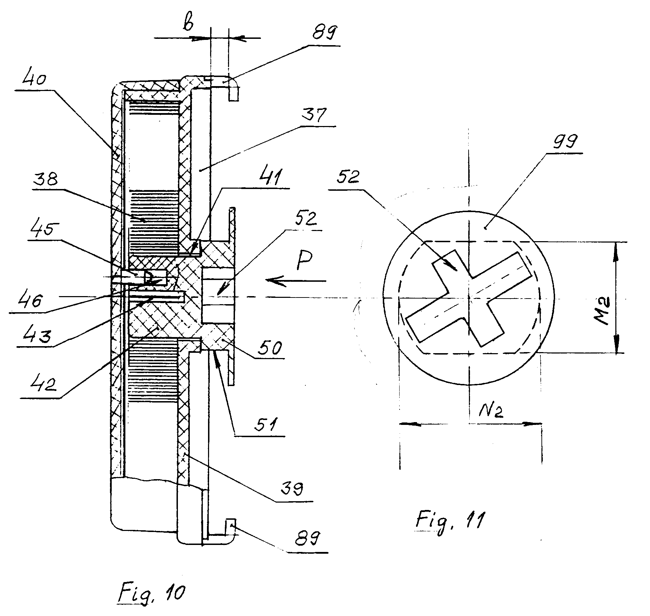

Die vierte Baugruppe ist ein Federantrieb 37 (Fig. 10, 11) mit einer Triebfeder 38, welche in einer Federbasis 39 vorgespannt eingelagert und mit einer Kappe 40 staubsicher abgedeckt ist.

In einer Lagerbohrung 41 der Basis 39 ist eine Kupplungsachse 42 drehbar gelagert, wobei das Innenende 43 der Triebfeder 38 in einem Schlitz 44 der Kupplungsachse 42 eingehängt ist.

Zur Aufrechterhaltung des vorgespannten Zustands der Feder 38 im vormontierten Zustand der Baugruppe ist die Kupplungsachse 42 gegenüber der Kappe 40 mittels eines Stiftvorsprungs 45 arretiert, welcher von der Innenwand der Kappe 40 aufragt und beim Aufsetzen der Kappe in eine Bohrung 46 im Stirnteil 47 der Kupplungsachse 42 eingeführt wird und diese blockiert. Der Stiftvorsprung 45 hat eine Sollbruchstelle 48 unmittelbar an der Innenwand der Kappe 40.

Das innere Ende der Kupplungsachse 42 vor der Federbasis 39 (Fig. 10) hat einen Halsabschnitt 50, dessen Durchmesser N2 kleiner ist als der Durchmesser N1 der Enderweiterung 16 des Langausschnitts 15. Außerdem hat der Halsabschnitt 50 zwei einander gegenüberliegende Abflachungen 51, deren Abstand M2 voneinander der Breite M1 des Langausschnitts 15 der Gehäuseseitenwand 3 entspricht.

In der inneren Stirnseite der Kupplungsachse 42 ist eine kreuzartige Ausnehmung 52 ausgeführt, welche zur Kupplung mit dem Kreuzvorsprung H der Aufrollwelle 28 (Tatzen 35 am Ende 33) vorgesehen ist. Die Tiefe der Ausnehmung 52 entspricht der Länge des Vorsprunges H.

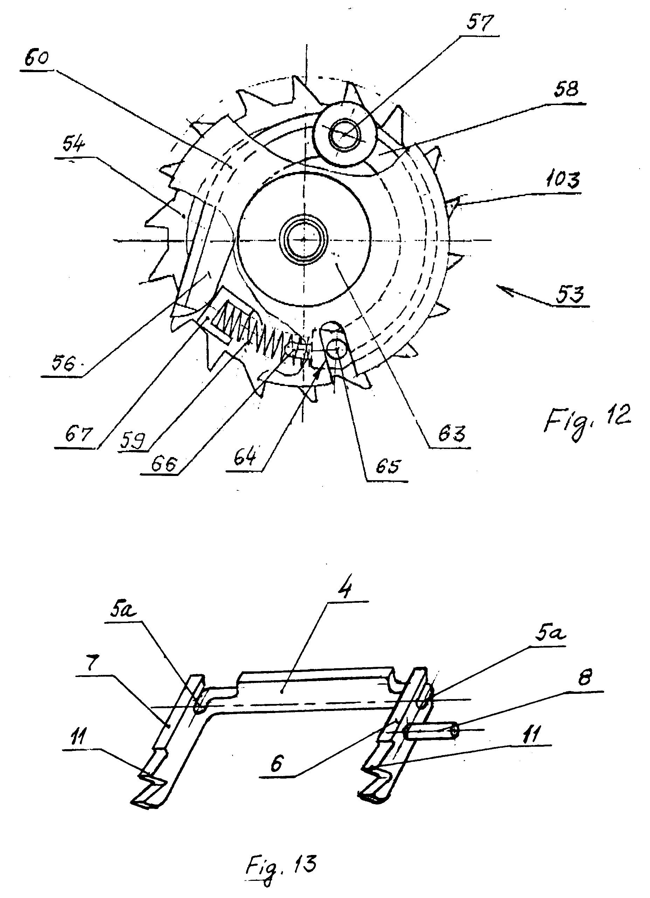

Die fünfte Baugruppe ist ein Räderbund 53 (Fig. 5 rechts und Fig. 12), dessen Hauptteil ein Kupplungszapfen 55 ist, der analog der Kupplungsachse 42 des Federantriebes 37 auf das in den Zeichnungen rechte Ende der Aufrollwelle 28 aufgesetzt ist und mit dieser zusammen rotiert. Ein Steuerzahnrad 54 mit einer Außenverzahnung 103 ist einstückig mit dem Kupplungszapfen 55 ausgebildet.

An der Außenfläche des Steuerzahnrades 54 ist eine zweiarmige Blockierklinke 56 auf einer exzentrisch gegenüber der Aufrollwellenachse angeordneten Sprungachse 57 schwenkbar aufgesetzt.

Der hintere Arm 58 der Klinke 56 ist von einer Trägheitsfeder 59 beaufschlagt, um die Blockierklinke 56 in ihrer Ruhestellung zu halten.

Ein Schwungrad 60 ist drehbar auf den Endabschnitt 61 des Kupplungszapfens 55 bzw. des Steuerrades 54 drehbar aufgesetzt. In eine Axialöffnung 62 des Endabschnitts 61 ist eine Lagerbüchse 63 fest eingesteckt, die das Schwungrad 60 auf dem Endabschnitt hält und ihrerseits ein zentrales Loch 78 aufweist.

An einer Umfangsstelle ist im Außenrand des Schwungrades 60 ein Schlitz 64 ausgeführt, mit dem ein Mitnehmerstift 65 zusammenwirkt, der am hinteren Arm 58 der Klinke 56 ausgebildet ist. Außerdem ist am Ende dieses hinteren Arms 58 ein Finger 66 angeordnet, der die Trägheitsfeder 59 trägt, welche sich mit ihrem anderen Ende auf einen C-förmig ausgebildeten Vorsprung 67 des Steuerzahnrades 54 stützt.

Die sechste Baugruppe ist schließlich eine Sensorenabdeckung 68 (Fig. 15) mit einem Deckel 69, welcher eine kreisrunde Innenwandrippe 70 aufweist, auf der, koaxial zur Drehachse der Aufrollwelle 28, ein Steuerkranz 71 drehbar angeordnet ist, dessen Innenverzahnung 72 mit der Blockierklinke 56, und zwar deren vorderem Arm, zusammenwirkt. Der Steuerkranz 71 ist im wesentlichen ringförmig ausgebildet und hat an einer Umfangsstelle außen eine Nockentasche 73, die mit dem Ende der Konsolachse 8 der Sperrklinke 4 zusammenwirkt.

Der Steuerkranz 71 ist durch eine Feder 74 in der Drehrichtung vorgespannt, die dem Aufwickeln des Gurtbandes auf die Aufrollwelle entspricht. In einer bestimmten Anfangsstellung liegt ein vom Außenumfang aufragender Vorsprung 76 des Steuerkranzes 71 an einem Vorsprung 75 an der Innenwand des Deckels 69 an und stützt sich gegen diesen.

Im Mittelpunkt der Innenwandrippe 70 des Deckels 69 ist eine stiftartige Tragachse 77 ausgebildet, deren Durchmesser so bemessen ist, daß das Loch 78 in der Lagerbüchse 63 des Räderbundes 53 gleitend und drehbar aufgeschoben werden kann.

Die beschriebenen Baugruppen werden wie folgt zum Gurtaufroller zusammengesetzt:

### Montageschritt A:

Das fahrzeugsensitive System wird in das Fenster 12 des Gehäuses 1 mit leichter Preßpassung eingesteckt. Im Rand des Fensters 12 ist eine Fixierausnehmung 79 vorgesehen. Ein Stützring 80 der Rundschale 20 hat einen Zahn 81, der in die Ausnehmung 79 greift. Durch Relativdrehung der Rundschale 20 gegenüber dem Stützring 80 kann die Sensor-Einheit mit einem gewünschten Neigungswinkel α relativ zur Gehäuserückwand 13 eingestellt werden. Auch kann der Winkel leicht dadurch verändert werden, daß der Zahn 81 an der Peripherie des Stützringes 80 eine veränderte Stellung einnimmt.

Um den erforderlichen Neigungswinkel β des Sensors 19 relativ zur Drehachse der Aufrollwelle 28 einzustellen, wird sein Lagerungsglied 22 um den entsprechenden Winkel gedreht und an der Tragplatte 21 befestigt.

Zu diesem Zweck weist das Lagerungsglied 22 eine Planscheibe 82 auf, welche rechtwinklig zur Drehachse X-X des Lagerungsgliedes 22 ausgeführt ist.

In der Mitte der Planscheibe 82 ist ein Schnappkopf 83 ausgebildet, welcher zur Befestigung des Sensors 19 in ein Zentralloch 84 der Tragplatte 21 gedrückt wird und in diesem federnd einrastet. In der Tragplatte 21 sind auf einem Koaxialkreis zu dem Loch 84 eine oder mehrere Ausnehmungen 85 ausgeführt, mittels deren die Stellung des Lagerungsgliedes 22 unter vorbestimmten Neigungswinkein β in der Weise fixierbar ist, daß ein Vorsprung 86 der Planscheibe 82 bei der Montage in eine der Ausnehmungen 85 greift. Wenn nur eine Fixierausnehmung 85 vorgesehen wird, so ist deren Lage an der Tragplatte 21 entsprechend dem erforderlichen Neigungswinkel β zu wählen.

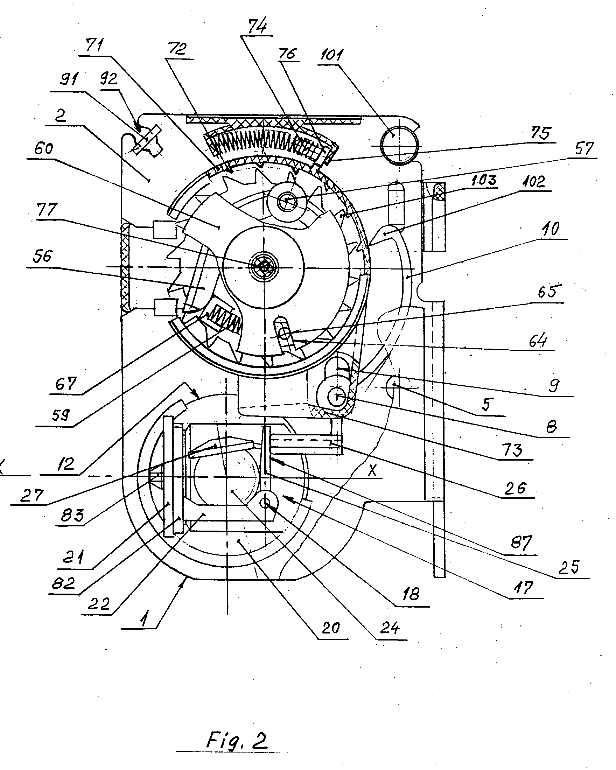

Nach der Montage des Sensors 19 an dem Gehäuse 1 berührt, wie in Fig. 2 ersichtlich, die Fläche 87 des Hebelstoßers 25 die Fläche 88 des Kontaktarms 26 des Steuerhakens 10 und kann auf diesen schwenkend einwirken. Damit ist eine Baugruppe A entstanden.

### Montageschritt B:

Unabhängig von dem vorstehend beschriebenen Montagevorgang wird die Aufrollwelle 28, der Federantrieb 37 und der Räderbund 53 zur aus Fig. 5 ersichtlichen Rotorbaugruppe zusammengestellt. Dies kann beispielsweise gleichzeitig in einer anderen Fertigungsstraße geschehen.

Zu diesem Zweck wird die Aufrollwelle 28 mit ihrem Kreuzvorsprung H in die kreuzartige Ausnehmung 52 der Kupplungsachse 42 des Federantriebes 37 eingeschoben.

Ebenso wird auf den gegenüberliegenden Kreuzvorsprung H der Aufrollwelle 28 der Kupplungszapfen 55 des Steuerzahnrades 54 und der übrige Räderbund 53 aufgeschoben. Damit ist als zweite Baugruppe die Rotorbaugruppe (Fig. 5) entstanden.

### Montageschritt C:

Die weitere Montage verläuft sehr einfach: Die Rotorbaugruppe wird durch die Langausschnitte 14 und 15 ins Gehäuse 1 der Baugruppe A eingeschoben bis die Sperrfinger 89 der Federbasis 39 in Ausnehmungen 90 in den Rändern der Seitenwand 3 gehäusefest einrasten. Der Halsabschnitt 50 der Kupplungsachse 42 und der entsprechende Halsabschnitt des Kupplungszapfens 55 befinden sich mit ihren Abflachungen 51 in den Enderweiterungen 16 der Langausschnitte 15 und 14.

Nach diesem Schritt wird eine Distanzleiste 91 in die Ausnehmungen 92 und 93 in den oberen Ecken der Seitenwände 2, 3 eingesteckt und um 90° gedreht, wodurch die Wände 2, 3 mit dem nötigen Abstand zueinander gegenseitig fixiert werden.

### Montageschritt D:

Die Montage-Schlußoperation ist das Aufsetzen der Sensorenabdeckung 68 auf die Gehäusewand 2. Dabei greift die stiftartige Tragachse 77 in das Loch 78 der Lagerbüchse 63 des Räderbundes 53. Der Steuerkranz 71 umgibt den Räderbund 53 an der Stelle in Axialrichtung, wo die Blockierklinke 56 sich befindet. Die Sperrfinger 94 des Deckels 69 schnappen in Ausnehmungen 95 in den Rändern der Seitenwand 2 ein. Dadurch wird die Aufrollwelle 28 mit ihren zusammengekoppelten Teilen zentriert und drehbar gelagert. Eine Drehung ist allerdings noch durch den Stiftvorsprung 45 der Kappe 40 verhindert. In diesem Stadium ist der Gurtaufroller zur Montage des Gurtbandes 96 vorbereitet.

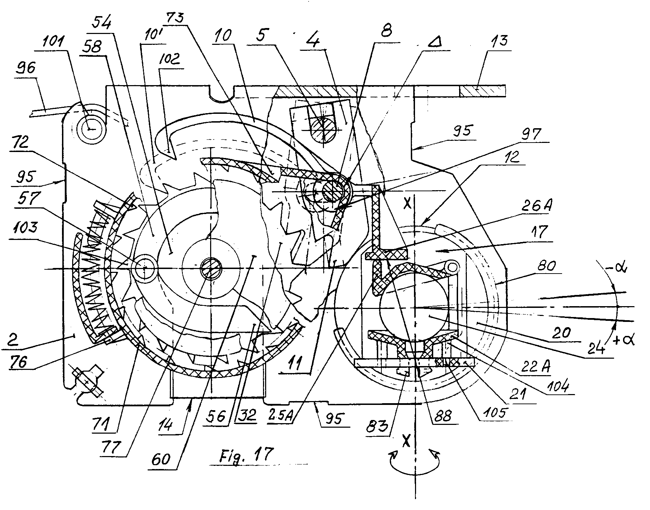

Wichtig sind in dem erreichten Montagezustand noch folgende Einzelheiten:
Beim Aufsetzen des Deckels 69 auf die Seitenwand 2 des Gehäuses 1 kommt die Nockentasche 73 des Steuerkranzes 71 in eine solche Lage, daß ihre Steuerfläche 97 (Fig. 15) mit einem kleinen Abstand unter dem Ende der Konsolachse 8 zu liegen kommt. In Fig. 17 ist dieser Abstand mit Δ bezeichnet. Die Steuerfläche 97 ist so ausgebildet, daß beim Drehen des Steuerkranzes 71 in Abwickelrichtung (bei Betrachtung von Fig. 2 im Gegenuhrzeigersinn) die Konsolachse 8 angehoben wird und sich im Langloch 9 nach oben bewegt. Dabei wird die Sperrklinke 4 nach oben geschwenkt, bis ihre Rastzähne 11 in die Verzahnungen 31a, 32a der Sperräder 31 und 32 greifen und diese blockieren.

Die ganze Rotorbaugruppe aus der Aufrollwelle 28, dem Räderbund 53 und dem Federantrieb 37 ist an zwei Stellen drehbar gelagert, nämlich auf der linken Seite in der Lageröffnung 41 der Federbasis 39 und auf der rechten Seite auf der Tragachse 77 des Deckels 69. Im Bereich der Enderweiterungen 16 der Langausschnitte 14, 15 befinden sich die Halsabschnitte 50 der Kupplungsachse 42 und des Kupplungszapfens 55 mit Spiel. Zwischen den Wänden 2, 3 des Gehäuses 1 und den Sperrädern 31, 32 der Aufrollwelle 28 liegen die Flansche 99 der Kupplungsachse 42 und des Kupplungszapfens 55 unter Belassung des zur freien Drehung notwendigen Spiels.

Nach erfolgter Montage des Gurtaufrollers ist schließlich noch das Gurtband 96 anzubringen und der Gurtaufroller betriebsbereit zu machen.

Ein Ende des Gurtbandes fixiert man in bekannter Weise in einem Spalt 100 der Aufrollwelle 28. Auch die anderen am Gurtband zu befestigenden, nicht dargestellten Beschläge des Sicherheitsgurtes werden angebracht.

Darauffolgend wird die Aufrollwelle 28 mit Gewalt gedreht, so daß der Stiftvorsprung 45 an seiner Sollbruchstelle 48 an der Kappe 40 durchgeschert wird. Jetzt kann die gespannte Triebfeder 38 die Aufrollwelle 28 weiterdrehen und wickelt das Gurtband auf die Spule 30.

Zwischen den Wänden 2, 3 des Gehäuses 1 ist in der der Distanzleiste 91 gegenüberliegenden Ecke eine Stützstange 101 gehäusefest eingebaut. Die Stützstange 101 dient zur Umlenkung des Gurtbandes 96, so daß dieses in nachfolgend erläuterter Weise unter einem gewünschten Winkel auf die Aufrollwelle 28 aufläuft.

Das gurtbandsensitive (auf plötzliche Abwicklung ansprechende) Sensorsystem besteht aus dem Steuerkranz 71 mit der Innenverzahnung 72, der Blockierklinke 56 und dem über die Trägheitsfeder 59 federbeaufschlagten Schwungrad 60. Es funktioniert in folgender Weise:
Wenn das Gurtband 96 bei seinem Abwickeln einen vorbestimmten Beschleunigungswert (z.B. 10 m/s²) überschreitet, dann wird durch die Trägheit des Schwungrades 60 die Trägheitsfeder 59 zusammengedrückt und die Blockierklinke 56 dreht sich in die Verrastung mit der Innenverzahnung 72. Dadurch wird der Steuerkranz 71 von der Aufrollwelle 28 mitgenommen und die Steuerfläche 97 der Nockentasche 73 hebt die Konsolachse 8 und damit die Sperrklinke 4 an, bis diese in die Sperräder 31, 32 greift und das Gurtband blockiert.

Das fahrzeugsensitive (auf plötzliche Verzögerung des Fahrzeugs ansprechende) Sensorsystem besteht aus dem Steuerzahnrad 54, dem Steuerhaken 10 und dem Massensensor 19 und funktioniert auf folgende Weise:
Beim Auftreten einer ein bestimmtes Maß übersteigenden Verzögerung oder Beschleunigung (z.B. 4 m/s²) des Fahrzeugs, in dem der Gurtaufroller eingebaut ist, wird die Massekugel 24 auf Grund ihrer Trägheit aus der Mitte des Lagerungsgliedes 22 versetzt und verschwenkt den Hebelstoßer 25. Dessen Kontaktfläche 87 wirkt mit der Fläche 88 des Kontaktarms 26 des Steuerhakens 10 zusammen und verschwenkt diesen in Eingriff mit dem Steuerzahnrad 54. Der Zahn 102 des Steuerhakens 10 greift in die Verzahnung 103 des Steuerzahnrades 54 ein und der Steuerhaken 10 wird bei einer Drehung der Aufrollwelle 28 in Abwikkelrichtung sofort angehoben und zieht die Konsolachse 8 nach oben, womit die Sperrklinke 4 nach oben schwenkt und die Sperräder 31, 32 und damit das Gurtband 96 blockiert.

Bei dem beschriebenen Gurtaufroller ist eine gegenseitige Abhängigkeit der beiden Sensorensysteme vermieden. Im Vergleich zu bekannten Einrichtungen ergibt sich eine höhere Zuverlässigkeit während einer längeren Lebensdauer. Die Zuverlässigkeit ist auch deshalb höher, weil bei Ausfall eines Systems die Funktion des anderen Systems erhalten bleibt. Durch die funktionsmäßige Trennung der beiden Sperrsysteme ergibt sich in besonders vorteilhafter Weise die Möglichkeit einer sehr exakten und variablen Justierung der Sperrsysteme. Außerdem ist als Vorteil anzusehen, daß wegen der wirkungsmäßig zueinander parallelen, aber getrennten und unabhängigen Systeme eines derselben unter Umständen entfallen und eingespart werden kann. Eventuell kann der Gurtaufroller auch nur mit einem Sensorsystem ausgerüstet sein, wobei die Teile für das andere, fahrzeugsensitive oder gurtbandsensitive System entfallen können.

Es ist zu sehen, daß das gurtbandsensitive Sensorsystem von den Neigungswinkeln des Gehäuses 1 in allen Richtungen unabhängig ist. Das fahrzeugsensitive Sensorsystem erfordert nur eine solche Befestigung des Gurtaufrollers, bei welcher die Kugel 24 in der Ruhestellung des Fahrzeuges im stabilen Gleichgewicht auf dem Lagerungsglied 22 liegt. Bei Fahrzeugen verschiedener Bauarten bedeutet dies, daß die Winkel (α, β), unter welchen das Gehäuse 1 an der Fahrzeugkarosserie anzubringen ist, von Fahrzeug zu Fahrzeug verändert werden muß. Bei der vorgeschlagenen Ausbildung ist es leicht möglich, die Anbauwinkel (α, β) des Kugellagerungsgliedes 22 mit Bezug auf das Gehäuse 1 so einzustellen, daß die Kugel 24 stabil liegt, wenn das Gehäuse an der Fahrzeugkarosserie angebracht ist.

Durch die Erfindung gelingt die Veränderung der Winkel leicht durch einen geringfügigen Austausch eines billigen Teils, nämlich der Rundschale 20 (wenn es nötig ist das Gehäuse des Gurtaufrollers um einen Winkel β zu neigen, egal in welche Richtung). Wenn gleichzeitig beide Neigungswinkel zu verändern sind, das heißt die beiden Winkel α und β verändert werden müssen, wären sowohl die Rundschale 20 als auch der Steuerhaken 10 auszutauschen.

Fig. 17 zeigt ein Beispiel einer Ausführung des Gurtaufrollers, welche vorzugsweise für einen waagerechten Einbau oder Anbau des Gurtaufrollers gut geeignet ist, z.B. an der Fahrzeugdecke. Bei dieser Ausführung ist der fahrzeugsensitive Massensensor 19A anders gestaltet.

Die Tragplatte 21 ist hier waagerecht orientiert, so daß eine Planscheibe (wie die Planscheibe 82 in Fig. 4) entbehrlich ist und das Lagerungsglied 22A gleichzeitig die Funktion der Befestigung an der Tragplatte 21 übernehmen kann.

Zur Fixierung der horizontalen Lage des Lagerungsgliedes 22A sind unter seinen peripheren Bereichen Beine 104 ausgebildet, deren untere Enden 105 stiftartig sind und in Bohrungen der Tragplatte 21 greifen. Auch der Hebelstoßer 25A hat eine etwas andere Form. Die Sperrklinke 4 ist bei dieser Ausführung von einer (nicht gezeigten) Feder in ihrer Ruhestellung gehalten.

Es ist leicht zu sehen, daß der vorgeschlagene Gurtaufroller für einen weiten Bereich von Ein- und Anbaufällen mit verschieden gerichteten Neigungen geeignet ist und dabei sehr billig herstellbar ist.

Die Vorsprünge H der Aufrollwelle 28 liegen innerhalb der Enderweiterungen 16 der Langausschnitte 14, 15 in den Halsabschnitten 50 von Kupplungsachse 42 und Kupplungszapfen 55. Bei extremen Beanspruchungen kommt es hier auf folgende Weise zu einer zusätzlichen Abstützung.

Wenn bei einer Kollision des Fahrzeugs mit einem anderen Fahrzeug oder einem Hindernis extreme Zugkräfte im Gurtband 96 wirken, kommt es zur Anlage der Halsabschnitte 50 an die Berandung der Enderweiterungen 16. Durch die Umschlingung der Stützstange 101 durch das Gurtband 96 ist die Richtung der Zugkraft auf die Aufrollwelle festgelegt und so gerichtet, daß die Anlage und zusätzliche Abstützung auf einem oberen Umfangsabschnitt 16A erfolgt, wo das Gehäuse recht stabil ist. Zu einem Ausschlagen der Aufrollwelle 28 aus den Langausschnitten 14, 15 kann es auf diese Weise nicht kommen. Die Stützstange 101 ist dabei so angebracht, daß die von dem Gurtband 96 ausgeübte Kraft unter etwa 45° auf die Aufrollwelle 28 wirkt.

### Bezugszeichenliste

- 1: Gehäuse
- 2: Seitenwand
- 3: Seitenwand
- 4: Sperrklinke
- 5: Bolzenachse
- 5a: Ausschnitte
- 6: Sperrschenkel
- 7: Sperrschenkel
- 8: Konsolachse
- 9: Langloch
- 10: Steuerhaken
- 11: Rastzähne
- 12: Fenster
- 13: Gehäuserückwand
- 14: Langausschnitt
- 15: Langausschnitt
- 16: Enderweiterung
- 16A: bogenartige Teile
- 17: Innenraum
- 18: fahrzeugsensitives Sensorsystem
- 19: Massensensor
- 19A: Massensensor
- 20: Rundschale
- 21: Tragplatte
- 22: Lagerungsglied
- 22A: Lagerungsglied
- 23: Boden
- 24: Kugel
- 25: Hebelstoßer
- 25A: Hebelstoßer
- 26: Kontaktarm
- 27: Kappenteil
- 28: Aufrollwelle
- 29: Wellenplatte
- 30: Spule
- 31: Sperrad
- 31a: Sperradverzahnung
- 32: Sperrad
- 32a: Sperradverzahnung
- 33: Ende
- 34: Ende
- 35: Tatzen
- 36: Tatzen
- 37: Federantrieb
- 38: Triebfeder
- 39: Federbasis
- 40: Kappe
- 41: Lageröffnung
- 42: Kupplungsachse
- 43: Innenende
- 44: Schlitz
- 45: Stiftvorsprung
- 46: Bohrung
- 47: Stirnteil
- 48: Sollbruchstelle
- 50: Halsabschnitt
- 51: Abflachung
- 52: Ausnehmung
- 53: Räderbund
- 54: Steuerzahnrad
- 55: Kupplungszapfen
- 56: Blockierklinke
- 57: Sprungachse
- 58: hinterer Arm
- 59: Trägheitsfeder
- 60: Schwungrad
- 61: Endabschnitt
- 62: Axialöffnung
- 63: Lagerbüchse
- 64: Schlitz
- 65: Mitnehmerstift
- 66: Finger
- 67: Vorsprung
- 68: Sensorenabdeckung
- 69: Deckel
- 70: Innenwandrippe
- 71: Steuerkranz
- 72: Innenverzahnung
- 73: Nockentasche
- 74: Feder
- 75: Vorsprung
- 76: Vorsprung
- 77: Tragachse
- 78: Loch
- 79: Fixierausnehmung
- 80: Stützring
- 81: Zahn
- 82: Planscheibe
- 83: Schnappkopf
- 84: Zentralloch
- 85: Ausnehmungen
- 86: Vorsprung
- 87: Fläche
- 88: Fläche
- 89: Sperrfinger
- 90: Ausnehmungen
- 91: Distanzleiste
- 92: Ausnehmung
- 93: Ausnehmung
- 94: Sperrfinger
- 95: Ausnehmungen
- 96: Gurtband
- 97: Steuerfläche
- 99: Flansche
- 100: Spalt
- 101: Stützstange
- 102: Zahn
- 103: Verzahnung
- 104: Beine
- 105: Beinende
- H: Kreuzvorsprung

## Patentansprüche

1. Gurtaufroller für Sicherheitsgurte von Fahrzeugen mit einem U-förmigen Gehäuse, in dem eine mit einem Federantrieb gekuppelte Aufrollwelle für das Gurtband drehbar gelagert ist, an deren Enden je ein verzahntes Sperrad befestigt ist, das mit einer schwenkbar im Gehäuse gelagerten U-förmigen Sperrklinke zusammenwirkt, welche von Sensorsystemen beim Überschreiten vorbestimmter Verzögerungswerte des Fahrzeugs und/oder Beschleunigungswerte des Gurtabrollens in ihre die Sperräder blockierende Sperrstellung verschwenkbar ist,
dadurch gekennzeichnet, daß der Gurtaufroller aus vormontierten Baugruppen zusammensetzbar ausgestaltet ist:
- einer Gehäuseeinheit, in der zwischen den Seitenwänden (2, 3) des Gehäuses (1) die Sperrklinke (4) eingesetzt ist und von einem Schenkel (6) derselben eine Konsolachse (8) durch die benachbarte Gehäuseseitenwand (2) nach außen ragt, wo ein zweiarmiger Steuerhaken (10) schwenkbar auf die Konsolachse (8) aufgesetzt ist,
wobei des Gehäuses Seitenwände (2, 3) zur freien Aufnahme der Aufrollwelle (28) zwei symmetrische, rechtwinklig zur Gehäuserückwand (13) verlaufende, nach vorn offene Langausschnitte (14, 15) mit kreisrunden Enderweiterungen (16) aufweisen
und zur Aufnahme eines fahrzeugsensitiven Sensors (19) ein kreisrundes Fenster (12) in einer Seitenwand vorgesehen ist,
und wobei zwischen den Seitenwänden eine Stützstange (101) starr befestigt ist, die das Gurtband (96) unter etwa 45° von hinten auf die Aufrollwelle (28) auflaufen läßt,
- einem fahrzeugsensitiven Sensorsystem (18), welches zur Anpassung an verschiedene Neigungswinkel des Gehäuses (1) im Fenster (12) verdrehbar angeordnet ist und einen im Innenraum (17) einer Rundschale (20) untergebrachten Massensensor (19) aufweist, in dem ein Lagerungsglied (22) mittels eines Schnappkopfs (83) an einer rechtwinklig zur Gehäuseseitenwand (2) orientierten Tragplatte (21) drehbar befestigt ist, so daß die Drehachse (X-X) des Lagerungsglieds (22) immer parallel zur Gehäuseseitenwand (2) bleibt und durch den Schwerpunkt einer auf dem Boden (23) des Lagerungsgliedes (22) liegenden, als Trägheitsmasse dienenden Kugel (24) geht, wozu die Tragplatte (21) ein Zentralloch (84) zum Einsetzen des Schnappkopfs (83) und mindestens eine Ausnehmung (85) neben dem Loch (84) und das Lagerungsglied (22) neben seiner Schnappkopfachse mindestens einen mit der Ausnehmung (85) zusammenwirkenden Vorsprung (86) zur Festlegung des Lagerungsgliedes in einer vorbestimmten Drehstellung an der Tragplatte (21) aufweisen, wobei am Boden des Lagerungsgliedes (22) ein Hebelstoßer (25) angelenkt ist, dessen zur Seitenwand (2) des Gehäuses (1) rechtwinklig orientierte Stoßfläche (87) mit dem unteren Kontaktarm (26) des Steuerhakens (10) unabhängig von der Drehlage des Lagerungsgliedes (22) um seine Schnappkopfachse (X-X) zusammenwirkt,
- einer Aufrollwelleeinheit bestehend aus der Aufrollwelle (28) selbst, ihrem Federantrieb (37) auf der einen und einem Räderbund (53) auf der anderen Seite, der aus einem Steuerzahnrad (54) und auf diesem sitzenden und mit ihm rotierenden Teilen des gurtbandsensitiven Sensorsystems besteht,
wobei der Federantrieb (37) eine vorgespannte und bis zum Ende der Montage des Gurtaufrollers in dieser Lage arretierte Triebfeder (38) enthält,
und das Steuerzahnrad (54) des Räderbundes (53) zur Verbindung mit seinem Ende der Aufrollwelle (28) einstückig mit einem Kupplungszapfen (55) ausgebildet ist,
und die Triebfeder (38) des Federantriebes mit ihrem inneren Ende (43) an einer Kupplungsachse (42) gehalten ist, welche in einer Lageröffnung (41) der Basis (39) des Federantriebes gelagert ist und so eine erste Lagerstelle der Aufrollwelleeinheit bildet sowie zur Verbindung des Federantriebes mit dem anderen Ende der Aufrollwelle (28) eingerichtet ist,
wobei die Basis (39) des Federantriebes an ihren Rändern einige Sperrfinger (89) und die zugehörige Gehäusewand (3) entsprechende Einrast-Ausnehmungen (90) aufweist, in die die Sperrfinger beim Einführen der Aufrollwelleeinheit ins Gehäuse einrasten,
- und einer Sensorenabdeckung (68) aus einem Deckel (69), an dessen Innenwand eine kreisrunde Rippe (70) koaxial zu der Aufrollwelle ausgebildet ist, auf welcher Rippe ein durch eine Feder (74) beaufschlagter, eine Innenverzahnung (72) aufweisender Steuerkranz (71) des gurtbandsensitiven Sensorsystems drehbar angeordnet ist.

2. Gurtaufroller nach Anspruch 1, dadurch gekennzeichnet, daß die Aufrollwelle (28) eine Wellenplatte (29) mit abgestuften Enden (33, 34) aufweist, auf welche eine Spule (30) aufgesetzt ist und auf die die beiden Sperräder (31, 32) mit Preßpassung aufgeschoben sind, wobei aus dem Mittelteil jedes Sperrades je zwei ausgestanzte Tatzen (35, 36) rechtwinklig nach außen abgebogen sind, welche zusammen mit den überstehenden Enden der Wellenplatte (29) kreuzartige Vorsprünge (H) bilden, und wobei in den Stirnseiten der Kupplungsachse (42) des Federantriebes und des Kupplungszapfens (55) des Steuerzahnrades (54) kreuzartige Ausnehmungen (52) für den Eingriff der Kreuzvorsprünge (H) vorgesehen sind.

3. Gurtaufroller nach Ansprüchen 1 und/oder 2, dadurch gekennzeichnet, daß im Stirnteil (47) der Kupplungsachse (42) ein Schlitz (44) zur Festlegung des inneren Endes (43) der Triebfeder (38) des Federantriebes (37) ausgeführt ist
und zum Sperren der Triebfeder (38) im vorgespannten Zustand im Stirnteil der Kupplungsachse (42) mindestens eine Bohrung (46) ausgeführt ist, in die ein von der inneren Wandung der Kappe (40) der Federbasis (39) aufragender Stiftvorsprung (45) greift, welcher zwischen der Kappe (40) und dem Stirnende der Kupplungsachse (42) eine Sollbruchstelle (48) aufweist.

4. Gurtaufroller nach einem oder mehreren der Ansprüche 1 bis 3, dadurch gekennzeichnet, daß die Aufrollwelleeinheit durch die Langausschnitte (14, 15) in den Seitenwänden (2, 3) des Gehäuses (1) in dieses einschiebbar ist und dabei auf der Seite des Federantriebes (37) Mittel (89, 90) zum selbsttätigen Einrasten vorgesehen sind.

5. Gurtaufroller nach einem oder mehreren der Ansprüche 1 bis 4, dadurch gekennzeichnet, daß beim Aufsetzen der Sensorenabdeckung (68) auf die zugehörige Seitenwand (2) des Gehäuses (1) eine stiftartige Tragachse (77), welche von der Innenwandung des Deckels (69) aufragt, in das Loch (78) einer in den Endabschnitt (61) des Steuerzahnrades (54) eingesetzten Lagerbüchse (63) greift und dabei die zweite Lagerstelle der Aufrollwelleeinheit bildet.

6. Gurtaufroller nach Anspruch 1, dadurch gekennzeichnet, daß auf einer Seite des Steuerzahnrades (54) exzentrisch zur Drehachse der Aufrollwelle eine Sprungachse (57) angeordnet ist, auf welcher eine zweiarmige Blokkierklinke (56) schwenkbar gelagert ist, deren vorderer Arm mit der Innenverzahnung (72) des Steuerkranzes (71) zusammenwirkt und deren hinterer Arm (58) mit einem Mitnehmerstift (65) in einen radialen Schlitz (64) eines auf den Endabschnitt (61) des Kupplungszapfens (55) drehbar aufgesetzten Schwungrades (60) greift und von einer Trägheitsfeder (59) beaufschlagt ist.

7. Gurtaufroller nach einem oder mehreren der Ansprüche 1 bis 6, dadurch gekennzeichnet, daß der Steuerkranz (71) im Deckel (69) der Sensorenabdeckung (68) den Räderbund (53) im Bereich der Blockierklinke (56) umgibt und diese zusammen mit dem Schwungrad (60) den gurtbandsensitiven Sensor des Gurtaufrollers bilden, wobei eine Steuerfläche (97) des Steuerkranzes (71) mit dem Ende der Konsolachse (8) zusammenwirkt und in der Ruhelage zwischen diesen ein Abstand (Δ) gegeben ist.

8. Gurtaufroller nach einem oder mehreren der Ansprüche 1 bis 7, dadurch gekennzeichnet, daß das gurtbandsensitive Sensorsystem und das fahrzeugsensitive Sensorsystem getrennt und unabhängig voneinander ausgebildet sind.

9. Gurtaufroller nach einem oder mehreren der Ansprüche 1 bis 4, dadurch gekennzeichnet, daß die Kupplungsachse (42) des Federantriebs (37) und der Kupplungszapfen (55) des Steuerzahnrades (54) auf ihren Halsabschnitten (50) mit Abflachungen (51) ausgebildet sind, welche das freie Einschieben der Aufrollwelleeinheit in das Gehäuse (1) ermöglichen, sowie an den Innenenden Flansche (99) aufweisen, welche zwischen den Sperrädern (31, 32) der Aufrollwelle (28) und den Innenflächen der Seitenwände (2, 3) des Gehäuses (1) mit Laufpassung zu liegen kommen.

10. Verfahren zur Herstellung des Gurtaufrollers nach Ansprüchen 1 bis 9, dadurch gekennzeichnet, daß die Befestigung des Federantriebes an seiner Gehäuseseitenwand durch das Einführen der Aufrollwelleeinheit in das Gehäuse geschieht
und daß die Triebfeder (38) des Federantriebes (37) durch ein Verdrehen der Aufrollwelle ausgeführt wird, welche den Stiftvorsprung (45) an der Sollbruchstelle (48) brechen läßt.
